(19) Europäisches Patentamt
European Patent Office
Office européen des brevets

(11) EP 4 549 518 B1

(12) EUROPEAN PATENT SPECIFICATION

(45) Date of publication and mention of the grant of the patent:
**29.04.2026 Bulletin 2026/18**

(21) Application number: **24814980.9**

(22) Date of filing: **08.04.2024**

(51) International Patent Classification (IPC):
***C08K 3/22*** *(2006.01)* ***C08K 3/28*** *(2006.01)*
***C08L 83/04*** *(2006.01)* ***C08J 5/18*** *(2006.01)*
***C09K 5/14*** *(2006.01)*

(52) Cooperative Patent Classification (CPC):
(C-Sets available)
**C09K 5/14; C08J 5/18; C08K 3/22; C08K 3/28; C08L 83/04;** C08G 77/04; C08G 77/12; C08G 77/20; C08J 2383/04; C08J 2483/00; C08K 2003/2227; C08K 2003/282; C08K 2201/001; C08K 2201/003; C08K 2201/006; (Cont.)

(86) International application number:
**PCT/JP2024/014209**

(87) International publication number:
**WO 2024/247493 (05.12.2024 Gazette 2024/49)**

# (54) THERMALLY CONDUCTIVE COMPOSITION, THERMALLY CONDUCTIVE SHEET USING SAME, AND PRODUCTION METHOD THEREFOR

WÄRMELEITENDE ZUSAMMENSETZUNG, WÄRMELEITENDE FOLIE DAMIT UND HERSTELLUNGSVERFAHREN DAFÜR

COMPOSITION THERMOCONDUCTRICE, FEUILLE THERMOCONDUCTRICE L’UTILISANT, ET PROCÉDÉ DE PRODUCTION ASSOCIÉ

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **29.05.2023 JP 2023087807**
**17.11.2023 PCT/JP2023/041437**

(43) Date of publication of application:
**07.05.2025 Bulletin 2025/19**

(73) Proprietor: **Fuji Polymer Industries Co., Ltd.**
**Nagoya-shi, Aichi 450-0002 (JP)**

(72) Inventor: **KAMIYA, Yuki**
**Nagoya-shi, Aichi 463-0026 (JP)**

(74) Representative: **Dehns**
**10 Old Bailey**
**London EC4M 7NG (GB)**

(56) References cited:
**WO-A1-2020/137086**
**WO-A1-2022/264790**
**CN-A- 112 041 411**
**JP-A- 2013 147 600**
**JP-B1- 7 217 079**
**US-A1- 2018 134 938**
**US-A1- 2021 147 681**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 549 518 B1

(52) Cooperative Patent Classification (CPC): (Cont.)
C08K 2201/014

C-Sets
**C08L 83/04, C08L 83/00, C08L 83/00, C08K 3/28, C08K 3/28, C08K 3/28, C08K 3/22, C08K 3/22, C08K 5/5415, C08K 5/56**

## Description

Technical Field

The present invention relates to a thermally conductive composition suitable to be interposed between a heat generating member and a heat dissipator in electrical and electronic components and the like, a thermally conductive sheet formed using the thermally conductive composition, and a method for producing the thermally conductive sheet.

Background Art

Recent dramatic improvements in performance of semiconductor devices such as CPUs has led to a considerable increase in the amount of heat generated by them. On this account, electronic components that generate heat are equipped with a heat dissipator, and a thermally conductive sheet is used to improve an adhesion between a semiconductor device and a heat dissipator. As devices become smaller, more sophisticated, and more highly integrated, there is an increasing demand for a flexible thermally conductive sheet having a high thermal conductivity. For example, thermally conductive sheets described in Patent Documents 1 to 4 have been proposed. Furthermore, the applicant of the present application proposed a thermally conductive sheet having a high thermal conductivity in Patent Documents 5 to 7.

Prior Art Documents

Patent Documents

[Patent Document 1] JP 2021-518466A
[Patent Document 2] JP 2020-137970A1
[Patent Document 3] JP 2018-088416A1
[Patent Document 4] JP 2016-216523A
[Patent Document 5] Japanese Patent No. 7061736
[Patent Document 6] CN 112041411A
[Patent Document 7] JP 7217079B1

Disclosure of Invention

Problem to be Solved by the Invention

However, conventional thermally conductive compositions and thermally conductive sheets formed using such thermally conductive compositions have a problem in that as the thermal conductivity becomes higher, the degree of plasticity of the compositions becomes higher and formability becomes worse. This is because a large amount of thermally conductive particles needs to be added to increase the thermal conductivity, and this increases the degree of plasticity of the compositions and degrades formability.
In order to solve the above-described problem in the conventional art, the present invention provides a thermally conductive composition that has a high thermal conductivity, a low degree of plasticity, and good formability, a thermally conductive sheet obtained using the thermally conductive composition, and a method for producing the thermally conductive sheet.

Means for Solving Problem

A thermally conductive composition according to the present invention includes: a matrix resin as component A, constituted by a thermosetting resin, a curing catalyst, and thermally conductive particles, wherein the thermally conductive particles include the following components B and C,

the component B being alumina having a D50 (median diameter) of 0.01 μm or more and less than 1 μm in a volume-based cumulative particle size distribution, contained in an amount of 220 to 500 parts by mass with respect to 100 parts by mass of the matrix resin, the component B including the following components B-1 and B-2,
the component B-1 being alumina having a D50 (median diameter) of 0.01 μm or more and less than 0.3 μm and a BET specific surface area of 9 $m^2/g$ or more, contained in an amount of 30 to 100% by mass with respect to 100% by mass of the component B,

the component B-2 being alumina having a D50 (median diameter) of 0.3 μm or more and less than 1 μm, contained in an amount of 0 to 70% by mass with respect to 100% by mass of the component B,
the component C being aluminum nitride having a D50 (median diameter) of 0.01 μm or more and 150 μm or less, contained in an amount of 1900 to 2500 parts by mass with respect to 100 parts by mass of the matrix resin, the component C including the following components C-1 and C-2,
the component C-1 having a D50 (median diameter) of 0.01 μm or more and less than 30 pm, and
the component C-2 having a D50 (median diameter) of 30 μm or more and 150 μm or less.

A thermally conductive sheet according to the present invention is formed from the thermally conductive composition described above.
A method for producing a thermally conductive sheet according to the present invention includes: defoaming the thermally conductive composition in a vacuum; rolling the defoamed thermally conductive composition so as to form a sheet; and heat-curing the sheet so as to obtain a thermally conductive sheet.

Effects of the Invention

With this composition, the present invention can provide a thermally conductive composition that has a high thermal conductivity, a low degree of plasticity, and good formability, and a thermally conductive sheet obtained using the thermally conductive composition. That is to say, the thermally conductive composition having a high thermal conductivity, a low degree of plasticity, and good formability can be obtained by using specific types of thermally conductive particles having specific particle sizes in specific amounts. Specifically, the degree of plasticity of the thermally conductive composition after defoaming before curing is preferably less than 100, and the thermal conductivity is preferably 14 W/m·K or more. Also, the method for producing a thermally conductive sheet according to the present invention enables continuous sheet formation because the composition has a low degree of plasticity and good formability.

Brief Description of Drawings

[FIG. 1] FIG. 1 is a schematic cross-sectional view illustrating how a thermally conductive sheet according to an embodiment of the present invention is used.
[FIG. 2] FIGS. 2A and 2B are schematic diagrams illustrating a method for measuring the thermal conductivity of a sample in an example of the present invention.

Description of the Invention

The present invention relates to a thermally conductive composition containing a matrix resin, a curing catalyst, and thermally conductive particles. The matrix resin is preferably a thermosetting resin, such as silicone rubber, silicone gel, acrylic rubber, fluorocarbon rubber, an epoxy resin, a phenolic resin, an unsaturated polyester resin, a melamine resin, an acrylic resin, a silicone resin, a fluorocarbon rein, or the like. In particular, silicone is preferable, and the matrix resin is in the form of elastomer, gel, putty, grease, or the like. The silicone may be cured using any method, such as the use of peroxide, an addition reaction, or a condensation reaction. Silicone is preferable because of its high heat resistance. An addition reaction-type silicone is preferable because the addition reaction-type silicone is not corrosive to the surroundings, releases little by-products to the outside of the system, and ensures deep curing, and so on.
The following thermally conductive particles are used with respect to 100 parts by mass of the matrix resin (component A).

(1) Component B: alumina having a D50 (median diameter) of 0.01 μm or more and less than 1 μm in a volume-based cumulative particle size distribution, added in an amount of 220 to 500 parts by mass with respect to 100 parts by mass of the matrix resin. The amount of the component B is preferably 230 to 480 parts by mass, and more preferably 240 to 440 parts by mass.

The component B includes the following components B-1 and B-2.
Component B-1: alumina having a D50 (median diameter) of 0.01 μm or more and less than 0.3 μm and a BET specific surface area of 9 $m^2$/g or more, contained in an amount of 30 to 100% by mass with respect to 100% by mass of the component B. The D50 (median diameter) is preferably 0.1 μm or more and less than 0.3 μm. The BET specific surface area is preferably 9 to 20 $m^2$/g, and more preferably 10 to 18 $m^2$/g. Note that the BET specific surface area is measured in accordance with JIS R 1626-1996.

Component B-2: alumina having a D50 (median diameter) of 0.3 μm or more and less than 1 pm, contained in an amount of 0 to 70% by mass with respect to 100% by mass of the component B. The D50 (median diameter) is preferably 0.3 μm or more and 1.0 μm or less.

(2) Component C: aluminum nitride having a D50 (median diameter) of 0.01 μm or more and 150 μm or less, added in an amount of 1900 to 2500 parts by mass with respect to 100 parts by mass of the matrix resin. The D50 (median diameter) is preferably 0.1 μm or more and 120 μm or less. The amount of the component C is preferably 1920 to 2400 parts by mass, and more preferably 1940 to 2300 parts by mass.

The component C includes the following components C-1 and C-2.

Component C-1 having a D50 (median diameter) of 0.01 μm or more and less than 30 μm.

Component C-2 having a D50 (median diameter) of 30 μm or more and 150 μm or less.

In the present invention, a plurality of types of inorganic particles with different average particle sizes are used in combination as the thermally conductive particles. In this case, small-size thermally conductive inorganic particles fill the gaps between large-size particles, and the particles can be filled in a state close to that having the highest attainable density. Thus, a thermally conductive composition having a high thermal conductivity, a low degree of plasticity, and good formability can be obtained.

A mass ratio between the component C-1 and the component C-2 preferably satisfies: component C-2 ≤ component C-1, or more preferably: the component C-2 < the component C-1. In this case, a thermally conductive composition having a high thermal conductivity, a low degree of plasticity, and good formability can be obtained.

A degree of plasticity of the thermally conductive composition after vacuum defoaming before curing is preferably less than 100, more preferably 10 to 99, further preferably 20 to 99, and particularly preferably 30 to 99. In this case, a thermally conductive composition having a low degree of plasticity and good formability can be obtained. The degree of plasticity is determined in accordance with JIS K 6300-3 and ISO 2007:1991 by using a Wallace plastometer and compressing a sample between two metal plates under a predetermined load (100 N) for a predetermined time (15 sec) at a measurement temperature of 25°C, and the degree of plasticity ($P_0 = t/t_0 \times 100$) is calculated by dividing the thickness (t) of the compressed sample by the thickness ($t_0$) of the sample before being compressed. The smaller the value $P_0$, the more flexible the sample. Note that the degree of plasticity ($P_0$) having a small value means the same as the degree of plasticity being low.

A thermal conductivity of a cured product of the thermally conductive composition is preferably 14 W/m·K or more, more preferably 14 to 20 W/m·K, and further preferably 14.5 to 20 W/m·K. Such a cured product has a high thermal conductivity and is suitable as a heat dissipation sheet: TIM (Thermal Interface Material).

SHORE 00 hardness of the cured product of the thermally conductive composition is preferably 75 or less, more preferably 10 to 75, and further preferably 15 to 72. Such a cured product has good conformability to a heat generating member and a heat dissipator (heat sink).

The matrix resin is preferably at least one polymer selected from the group consisting of an addition curable silicone polymer, a peroxide curable silicone polymer, and a condensation silicone polymer.

It is preferable to further add a silane coupling agent in an amount of 0.1 to 10 parts by mass, or more preferably 0.5 to 7 parts by mass, with respect to 100 parts by mass of the matrix resin. The silane coupling agent covers the surface of the thermally conductive particles (surface treatment), thereby allowing the thermally conductive particles to be filled in the matrix resin more easily (i.e., functioning as a plasticizer), preventing the adsorption of the curing catalyst onto the thermally conductive particles, and preventing inhibition of curing. This is advantageous in terms of storage stability. The silane coupling agent may be, for example, a silane compound represented by $R(CH_3)_aSi(OR')_{4-a}$ (where R represents an unsubstituted or substituted organic group having 1 to 20 carbon atoms, R' represents an alkyl group having 1 to 4 carbon atoms, and a represents 0 or 1) or a partial hydrolysate thereof. Examples of an alkoxysilane compound represented by $R(CHa)_aSi(OR')_{4-a}$ (where R represents an unsubstituted or substituted organic group having 1 to 20 carbon atoms, R' represents an alkyl group having 1 to 4 carbon atoms, and a represents 0 or 1)

(hereinafter simply referred to as "silane") include silane compounds such as methyltrimethoxysilane, ethyltrimethoxysilane, propyltrimethoxysilane, butyltrimethoxysilane, pentyltrimethoxysilane, hexyltrimethoxysilane, hexyltriethoxysilane, octyltrimethoxysilane, octyltriethoxysilane, decyltrimethoxysilane, decyltriethoxysilane, dodecyltrimethoxysilane, dodecyltriethoxysilane, hexadecyltrimethoxysilane, hexadecyltriethoxysilane, octadecyltrimethoxysilane, and octadecyltriethoxysilane. One of the above-described silane compounds may be used alone, or two or more thereof in combination.

At least one component selected from the group consisting of alumina (aluminum oxide) used as the component B and aluminum nitride used as the component C is preferably in the form of irregularly-shaped crushed particles. The irregularly-shaped crushed particles are easily available. Hereinafter, the "irregularly-shaped crushed" state is also referred to simply as "irregularly-shaped".

A thermally conductive sheet formed from the thermally conductive composition according to the present invention is very versatile and suitable as a TIM. A thickness of the thermally conductive sheet is preferably 0.2 to 10 mm.

A method for producing a thermally conductive sheet according to the present invention includes: defoaming the

thermally conductive composition in a vacuum; rolling the defoamed thermally conductive composition so as to form a sheet; and heat-curing the sheet so as to obtain a thermally conductive sheet. The thermally conductive composition (compound) is defoamed in a vacuum by being left under a reduced pressure of -0.08 to -0.1 Pa for 5 to 10 minutes. The rolling may be, for example, rolling using rotating rolls or pressing, and rolling using rotating rolls is preferable because it enables continuous production.

The thermally conductive composition preferably has a dielectric breakdown voltage (JIS K 6249) of 7 to 16 kV/mm. In this case, a thermally conductive sheet having high electrical insulation properties can be obtained.

The thermally conductive composition preferably has a volume resistivity (JIS K 6249) of $10^{10}$ to $10^{14}$ $\Omega\cdot$cm. In this case, a thermally conductive sheet having high electrical insulation properties can be obtained.

If the thermally conductive composition of the present invention is an addition reaction-type silicone composition (uncured composition), for example, the thermally conductive composition is preferably a compound having the following composition.

A Matrix resin

The matrix resin contains the following (A1) and (A2).

(A1) Base polymer component: a linear organopolysiloxane having at least two silicon-bonded alkenyl groups per molecule.

(A2) Crosslinking component: an organohydrogenpolysiloxane having at least two silicon-bonded hydrogen atoms per molecule, contained such that the number of moles of the organohydrogenpolysiloxane is less than one mole with respect to one mole of silicon-bonded alkenyl groups contained in the component A.

In addition to the above-described components (A1) and (A2), the matrix resin may further contain an organopolysiloxane having no reactive group, such as an unreacted silicone oil, e.g., dimethylpolysiloxane.

In the present specification, a total amount of the base polymer component (A1), the crosslinking component (A2), unreacted silicone oil, and a silane coupling agent is taken to be 100 parts by mass.

B Thermally conductive particles: the thermally conductive particles described above.

C Platinum group metal catalyst: 0.01 to 1000 ppm by mass with respect to the matrix resin.

D Other additives: a silane coupling agent, curing retarder, coloring agent, etc., in any desired amounts.

The following describes each component.

(1) Base polymer component (component A1)

The base polymer component is an organopolysiloxane having two or more silicon-bonded alkenyl groups per molecule. The organopolysiloxane having two or more alkenyl groups is the main agent (base polymer component) of a silicone rubber composition according to the present invention. The organopolysiloxane has two silicon-bonded alkenyl groups having 2 to 8 carbon atoms, in particular 2 to 6 carbon atoms, such as a vinyl group or an allyl group, per molecule. Viscosity of the organopolysiloxane is desirably 10 to 1,000,000 mPa·s and particularly desirably 100 to 100,000 mPa·s, at 25°C from the viewpoint of workability and curability.

Specifically, an organopolysiloxane having two or more alkenyl groups bonded to silicon atoms that are at both ends of the molecular chain per molecule as represented by the following general formula (Chemical Formula 1) is used. Such an organopolysiloxane is a linear organopolysiloxane whose side chains are capped with alkyl groups. The viscosity of the organopolysiloxane is desirably 10 to 1,000,000 mPa·s at 25°C from the viewpoint of workability and curability. This linear organopolysiloxane may have a small amount of branched structures (trifunctional siloxane units) in the molecular chain.

[Chemical Formula 1]

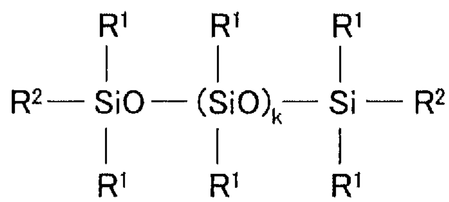

In the above formula, $R^1$s are the same as or different from each other, each representing an unsubstituted or substituted monovalent hydrocarbon group having no aliphatic unsaturated bond, $R^2$ represents an alkenyl group, and k represents 0 or a positive integer. The unsubstituted or substituted monovalent hydrocarbon group having no aliphatic unsaturated bond and represented by $R^1$ preferably has, for example, 1 to 10 carbon atoms, in particular, 1 to 6 carbon atoms, and specific examples thereof include: alkyl groups such as a methyl group, an ethyl group, a propyl group, an isopropyl group, a butyl group, an isobutyl group, a tert-butyl group, a pentyl group, a neopentyl group, a hexyl group, a cyclohexyl group, an octyl group, a nonyl group, and a decyl group; aryl groups such as a phenyl group, a tolyl group, a xylyl group, and a naphthyl group; aralkyl groups such as a benzyl group, a phenylethyl group, and a phenylpropyl group; and these groups in which at least one or all of hydrogen atoms are substituted by a halogen atom such as fluorine, bromine, or chlorine or by a cyano group or the like, for example, halogen-substituted alkyl groups such as a chloromethyl group, a chloropropyl group, a bromoethyl group, and a trifluoropropyl group, and a cyanoethyl group. The alkenyl group represented by $R^2$ preferably has, for example, 2 to 6 carbon atoms, in particular, 2 or 3 carbon atoms, and specific examples thereof include a vinyl group, an allyl group, a propenyl group, an isopropenyl group, a butenyl group, an isobutenyl group, a hexenyl group, and a cyclohexenyl group, and the vinyl group is preferable. In the general formula (1), k typically represents 0 or a positive integer satisfying $0 \leq k \leq 10{,}000$, preferably an integer satisfying $5 \leq k \leq 2{,}000$, and more preferably an integer satisfying $10 \leq k \leq 1{,}200$.

As an organopolysiloxane for the component A1, an organopolysiloxane having 3 or more, typically 3 to 30, and preferably about 3 to 20 silicon-bonded alkenyl groups per molecule may also be used in combmation, wherein each silicon-bonded alkenyl group is an alkenyl group having 2 to 8 carbon atoms, in particular 2 to 6 carbon atoms, such as a vinyl group or an allyl group, or the like. A molecular structure of the organopolysiloxane to be used in combination may be a linear, cyclic, branched, or three-dimensional network structure. The organopolysiloxane to be used in combination is preferably a linear organopolysiloxane, in which the main chain is formed of repeating diorganosiloxane units and both ends of the molecular chain are capped with triorganosiloxy groups, and which has a viscosity of 10 to 1,000,000 mPa·s, in particular 100 to 100,000 mPa·s, at 25°C.

Each alkenyl group may be bonded to any part of the molecule. For example, the organopolysiloxane may include alkenyl groups bonded to either a silicon atom that is at the end of the molecular chain or a silicon atom that is not at the end (but in the middle) of the molecular chain. In particular, a linear organopolysiloxane having 1 to 3 alkenyl groups on a silicon atom at each end of the molecular chain as represented by the following general formula (Chemical Formula 2) and having a viscosity of 10 to 1,000,000 mPa·s at 25°C is desirable from the viewpoint of workability and curability as described above. However, if a sum of the alkenyl groups bound to silicon atoms that are at both ends of the molecular chain is less than 3, the linear organopolysiloxane has at least one alkenyl group bound to a silicon atom that is not at the ends (but in the middle) of the molecular chain (for example, as a substituent in a diorganosiloxane unit). This linear organopolysiloxane may have a small amount of branched structures (trifunctional siloxane units) in the molecular chain.

[Chemical Formula 2]

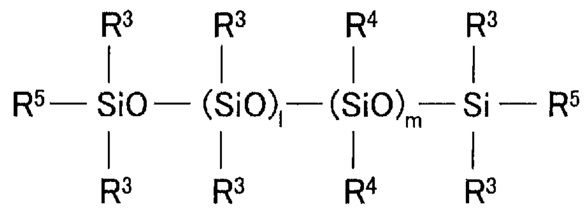

In the above formula, $R^3$s are the same as or different from each other, each representing an unsubstituted or substituted monovalent hydrocarbon group, and at least one $R^3$ is an alkenyl group. $R^4$s are the same as or different from each other, each representing an unsubstituted or substituted monovalent hydrocarbon group having no aliphatic unsaturated bond, $R^5$ represents an alkenyl group, and 1 and m each represent 0 or a positive integer. The monovalent hydrocarbon group represented by $R^3$ preferably has 1 to 10 carbon atoms, in particular, 1 to 6 carbon atoms, and specific examples thereof include: alkyl groups such as a methyl group, an ethyl group, a propyl group, an isopropyl group, a butyl group, an isobutyl group, a tert-butyl group, a pentyl group, a neopentyl group, a hexyl group, a cyclohexyl group, an octyl group, a nonyl group, and a decyl group; aryl groups such as a phenyl group, a tolyl group, a xylyl group, and a naphthyl group; aralkyl groups such as a benzyl group, a phenylethyl group, and a phenylpropyl group; alkenyl groups such as a vinyl group, an allyl group, a propenyl group, an isopropenyl group, a butenyl group, a hexenyl group, a cyclohexenyl group, and an octenyl group; and these groups in which at least one or all of hydrogen atoms are substituted by a halogen atom, such as fluorine, bromine, or chlorine, or by a cyano group or the like, for example, halogen-substituted alkyl groups, such as a chloromethyl group, a chloropropyl group, a bromoethyl group, and a trifluoropropyl group, and a cyanoethyl group.

The monovalent hydrocarbon group represented by $R^4$ preferably has 1 to 10 carbon atoms, in particular, 1 to 6 carbon atoms, and specific examples thereof include the specific examples of $R^1$ listed above, excluding the alkenyl groups. The alkenyl group represented by $R^5$ preferably has, for example, 2 to 6 carbon atoms, in particular, 2 or 3 carbon atoms, and specific examples thereof include the examples of $R^2$ in the above formula (Chemical Formula 1), and a vinyl group is preferable. l and m each typically represent 0 or a positive integer satisfying $0 < l+m \leq 10{,}000$, preferably $5 \leq l+m \leq 2{,}000$, more preferably $10 \leq l+m \leq 1{,}200$, and also satisfying $0 < l/(l+m) \leq 0.2$, or more preferably $0.0011 \leq l/(l+m) \leq 0.1$.

(2) Crosslinking component (component A2)

The organohydrogenpolysiloxane used as the component A2 of the present invention acts as a crosslinking agent. A cured product is formed through an addition reaction (hydrosilylation) between SiH groups in this component and alkenyl groups in the component A. Any organohydrogenpolysiloxane having two or more silicon-bonded hydrogen atoms (i.e., SiH groups) per molecule can be used as the crosslinking component. The molecular structure of this organohydrogenpolysiloxane may be a linear, cyclic, branched, or three-dimensional network structure. It is possible to use an organohydrogenpolysiloxane in which a number of silicon atoms per molecule (i.e., the degree of polymerization) is 2 to 1,000, in particular, around 2 to 300.

There is no particular limitation on positions of the silicon atoms to which the hydrogen atoms are bonded, and the hydrogen atoms may be bonded to the silicon atoms that are at the ends of the molecular chain or are not at the ends (but in the middle) of the molecular chain. Examples of organic groups bonded to the silicon atoms other than the hydrogen atoms include the unsubstituted or substituted monovalent hydrocarbon groups having no aliphatic unsaturated bond listed above as the examples of $R^1$ in the general formula (Chemical formula 1).

An example of the organohydrogenpolysiloxane used as the component A2 has the following structure.

[Chemical Formula 3]

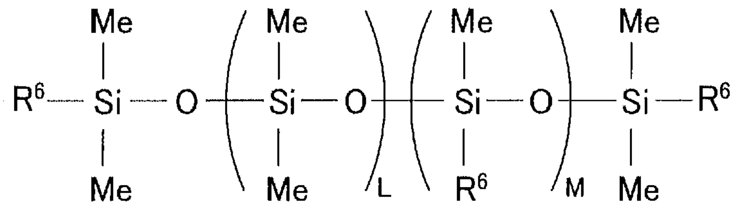

In the above formula, $R^6$s are the same as or different from each other, and each represents an alkyl group, a phenyl group, an epoxy group, an acryloyl group, a methacryloyl group, an alkoxy group, or a hydrogen atom, and at least two $R^6$s are hydrogen atoms. L represents an integer of 0 to 1,000, in particular, an integer of 0 to 300, and M represents an integer of 1 to 200.

(3) Catalyst component

A catalyst used for a hydrosilylation reaction can be used as a catalyst component. Examples of the catalyst component include platinum group metal catalysts including: platinum-based catalysts, such as platinum black, platinic chloride, chloroplatinic acid, a reaction product of chloroplatinic acid and monohydric alcohol, a complex of chloroplatinic acid with an olefin or vinylsiloxane, platinum-based catalysts such as bisacetoacetate, etc. palladium-based catalysts, and rhodium-based catalysts. A two-liquid type room temperature curing silicone polymer contains a platinum group metal catalyst, but an additional platinum group metal catalyst is used to control a curing rate of the thermally conductive composition.

(4) Thermally conductive particles (component B and component C)

In the present invention, it is preferable to use as the thermally conductive particles, at least three types of inorganic particles with different average particle sizes in combination. In the case where three types of inorganic particles are used, the components B-1, C-1, and C-2 are used. In the case where four types of inorganic particles are used, the component B-2 is additionally used. In this case, small-size thermally conductive inorganic particles fill the gaps between large-size particles, and the particles can be filled in a state close to that having the highest attainable density and the thermally conductive composition has a high thermal conductivity.

(5) Other additives

The composition of the present invention may contain components other than the above-described components, when necessary. For example, it is possible to add a heat resistance improver, such as colcothar, titanium oxide, or cerium oxide, a flame retardant auxiliary, a curing retarder, and the like. Moreover, an organic or inorganic pigment may be added for the purpose of coloring and toning. The silane coupling agent described above may also be added.

The following describes the present invention with reference to the drawings. In the drawings described below, the same reference numerals denote the same components. FIG. 1 is a schematic cross-sectional view illustrating a heat dissipation structure 10 in which thermally conductive sheets of an embodiment of the present invention are incorporated. A thermally conductive sheet 11b dissipates heat generated by an electronic component 13, such as a semiconductor element, and is fixed to a main surface 12a of a heat spreader 12 facing the electronic component 13, and is sandwiched between the electronic component 13 and the heat spreader 12. Further, a thermally conductive sheet 11a is sandwiched between the heat spreader 12 and a heat sink 15. The thermally conductive sheets 11a and 11b and the heat spreader 2 constitute a heat dissipating member that dissipates heat from the electronic component 13. The heat spreader 12 is, for example, in the form of a rectangular plate, and has the main surface 12a facing the electronic component 13 and side walls 12b extending vertically from the periphery of the main surface 12a. In the heat spreader 12, the thermally conductive sheet 11b is provided on the main surface 12a surrounded by the side walls 12b, and a heat sink 15 is provided via the thermally conductive sheet 11a on a surface 12c of the heat spreader 2, which is on the side opposite to the main surface 12a. The electronic component 13 is a semiconductor element, for example, a BGA or the like, and is mounted on a wiring board 14.

[Examples]

The following describes the present invention with use of examples. Various parameters were measured using the following methods.

<Thermal conductivity>

The thermal conductivity of a thermally conductive silicone rubber sheet was measured using a hot disk (in accordance with ISO 22007-2:2008). As shown in FIG. 2A, this thermal conductivity measuring device 1 sandwiches a polyimide film sensor 2 between two samples 3a and 3b, applies a constant power to the sensor 2 to cause a certain amount of heat generation, and analyzes thermal characteristics based on the value of the temperature rise of the sensor 2. The sensor 2 has a tip 4 with a diameter of 7 mm. As shown in FIG. 2B, the tip 4 has a double spiral electrode structure, and electrodes 5 for applied current and electrodes 6 for a resistance value (temperature measurement electrode) are arranged in a lower portion of the sensor 2. The thermal conductivity was calculated using the following equation (Formula 1).

[Formula 1]

$$\lambda = \frac{Po \cdot D(\tau)}{\pi^{3/2} \cdot r} \cdot \frac{D(\tau)}{\Delta T(\tau)}$$

| | |
|---|---|
| $\lambda$: | Thermal conductivity (W/m·K) |
| $P_0$: | Constant power (W) |
| r: | Radius of sensor (m) |
| $\tau$: | $\sqrt{\alpha \cdot t/r^2}$ |
| $\alpha$: | Thermal diffusivity of sample ($m^2/s$) |
| t: | Measuring time (s) |
| $D(\tau)$: | Dimensionless function of $\tau$ |
| $\Delta T(\tau)$: | Temperature rise of sensor (K) |

<Hardness>

The hardness of the thermally conductive silicone rubber sheet was measured in accordance with SHORE 00.

<Degree of plasticity>

The degree of plasticity was determined in accordance with JIS K 6300-3 and ISO 2007:1991 by using a Wallace plastometer and compressing a sample between two metal plates under a predetermined load (100 N) for a predetermined time (15 secs) at a measurement temperature of 23°C, and the degree of plasticity ($P_0 = t/t_0 \times 100$) was calculated by dividing a thickness (t) of the compressed sample by a thickness ($t_0$) of the sample before being compressed. The smaller the degree of plasticity ($P_0$), the more flexible the sample. The degree of plasticity before defoamed in a vacuum corresponds to a degree of plasticity of a compound that has just been produced. The degree of plasticity after defoaming corresponds to a degree of plasticity after the produced compound is defoamed under a reduced pressure of -0.1 Pa for 5 minutes. The degree of plasticity after defoaming is important because the compound is formed into a sheet after being defoamed.

<BET specific surface area>

The BET specific surface area of thermally conductive particles was measured in accordance with JIS R 1626-1996. The larger the BET specific surface area, the smaller D50 (median diameter) of the thermally conductive particles in a volume-based cumulative particle size distribution.

(Examples 1 to 5, Comparative Examples 1 to 5)

1. Material components

(1) Polyorganosiloxane (component A)

A commercially available two-liquid type room temperature curing silicone polymer (silicone component) containing a polyorganosiloxane was used. One of the components (solution A) contained a base polymer component (the component A1 as part of the component A) and a platinum group metal catalyst. The other component (solution B) contained a base polymer component (the component A1 as part of the component A) and an organohydrogenpolysiloxane used as a crosslinking component (the component A2 as part of the component A). The mass ratio between the solution A and the solution B was A:B = 100:100.

(2) Thermally conductive particles (component B)

Thermally conductive particles shown in Table 1 were used. The average particle size is D50 (median diameter) in a volume-based cumulative particle size distribution measured by a laser diffraction/scattering method. A measuring instrument to be used in this method may be, for example, a laser diffraction/scattering particle size distribution analyzer LA-950 S2 manufactured by HORIBA, Ltd. Each value before μm in the tables is an average particle size of the particles.

(3) Thermally conductive particles (component C)

Thermally conductive particles shown in Table 1 were used. The average particle size is D50 (median diameter) in a volume-based cumulative particle size distribution measured by the laser diffraction/scattering method. A measuring instrument to be used in this method may be, for example, the laser diffraction/scattering particle size distribution analyzer LA-950 S2 manufactured by HORIBA, Ltd. Each value before μm in the tables is an average particle size of the particles. AlN in the tables is the abbreviation of aluminum nitride.

(4) Platinum group metal catalyst

A platinum-vinyldisiloxane complex was used as an additional platinum group metal catalyst. As described above, the two-liquid type room temperature curing silicone polymer (silicone component) contained a platinum group metal catalyst. In the preparation of silicone compositions of the respective examples, the additional platinum group metal catalyst was added to ensure sufficient curing of the polyorganosiloxane.

(5) Additive 1

Dimethylpolysiloxane (with a viscosity of 100 $mm^2/s$ at 25 °C when measured using a Brookfield rotational viscometer SP No.2) was used as an unreacted silicone oil.

(6) Additive 2

Decyltrimethoxysilane was used as a silane coupling agent.

2. Compound

The materials in amounts shown in Table 1 were weighed and mixed in a mixer to obtain a compound. In Table 1, the amount of each material is shown as an amount (parts by mass) when the amount of the silicone component (two-liquid type room temperature curing silicone polymer) is taken to be 100 parts by mass (100 g). The compound was defoamed under a reduced pressure of -0.1 Pa for 5 minutes.

3. Sheet forming process

The compound was sandwiched between polyethylene terephthalate (PET) films that had been subjected to a release treatment, and then was formed into a sheet having a thickness of 2.0 mm by rolling using even-speed rolls at a temperature of 23°C and a roller speed of 0.5 m/min. Subsequently, the composition in the form of sheet was heat-cured at 100°C for 15 minutes to obtain a thermally conductive silicone rubber sheet. The formability was determined to be "formable" when sheet forming under the above-described conditions was possible or to be "failed" when sheet forming under the above-described conditions was not possible.

The above-described conditions and results are shown in Tables 1 and 2. Tables 1 and 2 show amounts of the respective components when the total amount of the base polymer component (A1), the crosslinking component (A2), the unreacted silicone oil, and the silane coupling agent is taken to be 100 parts by mass.

[Table 1]

| | Example 1 | Example 2 | Example 3 | Example 4 | Example 5 |
|---|---|---|---|---|---|
| A: Matrix resin, two-liquid type curing silicone polymer (g) | 44.5 | 92.5 | 42.8 | 42.8 | 42.8 |
| A: Unreacted oil (g) | 50 | - | 50 | 50 | 50 |
| A: Silane coupling agent (g) | 5 | 7 | 7 | 7 | 7 |
| Platinum catalyst (g) | 0.5 | 0.5 | 0.2 | 0.2 | 0.2 |
| B-1: Irregularly-shaped alumina, D50=0.16 μm BET specific surface area 13 $m^2/g$ (g) | 150 | 150 | - | - | - |
| B-1: Irregularly-shaped alumina, D50=0.21 μm BET specific surface area 11 $m^2/g$ (g) | - | - | 300 | 400 | 90 |
| B-2: Irregularly-shaped alumina, D50=0.3 μm BET specific surface area 7 $m^2/g$ (g) | 100 | 150 | - | - | 180 |
| B-2: Irregularly-shaped alumina, D50=0.88 μm BET specific surface area 16 $m^2/g$ (g) | - | - | - | - | - |
| C-1: Irregularly-shaped AlN, D50=1 μm (g) | 450 | 450 | 500 | 400 | 400 |
| C-1:Irregularly-shaped AlN, D50=20 μm (g) | 750 | 700 | 1000 | 700 | 900 |
| C-2: Irregularly-shaped AlN, D50=70 μm (g) | - | - | 700 | - | - |
| C-2: Irregularly-shaped AlN, D50=84 μm (g) | - | - | - | 1000 | 800 |
| C-2: Irregularly-shaped AlN, D50=108 μm (g) | 850 | 800 | - | - | - |
| Total mass of filler (g) | 2300 | 2250 | 2500 | 2500 | 2370 |
| Total mass of composition (g) | 2400 | 2350 | 2600 | 2600 | 2470 |
| Total mass of alumina (B-1)+(B-2) (g) | 250 | 300 | 300 | 400 | 270 |
| (B-1)/[(B-1)+(B-2)] percentage (%) | 60 | 50 | 100 | 100 | 33.3 |
| Total mass of AlN (C-1)+(C-2) (g) | 2050 | 1950 | 2200 | 2100 | 2100 |
| (C-1) mass (g) | 1200 | 1150 | 1500 | 1100 | 1300 |

(continued)

| | Example 1 | Example 2 | Example 3 | Example 4 | Example 5 |
|---|---|---|---|---|---|
| (C-2) mass (g) | 850 | 800 | 700 | 1000 | 800 |
| Hardness (SHORE 00) | 67 | 66 | 57 | 61 | 70 |
| Thermal conductivity (W/mK) | 14.5 | 15.0 | 15.2 | 15.5 | 14.5 |
| Degree of plasticity before curing | 86.1 | 88.3 | 89.0 | 84.0 | 98.8 |
| Formability | Formable | Formable | Formable | Formable | Formable |

[Table 2]

| | Comparative Example 1 | Comparative Example 2 | Comparative Example 3 | Comparative Example 4 | Comparative Example 5 |
|---|---|---|---|---|---|
| A: Matrix resin, two-liquid type curing silicone polymer (g) | 92.5 | 92.5 | 42.8 | 42.8 | 94.8 |
| A: Unreacted oil (g) | - | - | 50 | 50 | |
| A: Silane coupling agent (g) | 7 | 7 | 7 | 7 | 5 |
| Platinum catalyst (g) | 0.5 | 0.5 | 0.2 | 0.2 | 0.2 |
| B-1: Irregularly-shaped alumina, D50=0.16 μm BET specific surface area 13 $m^2/g$ (g) | - | - | 200 | 550 | 300 |
| B-1: Irregularly-shaped alumina, D50=0.21 μm BET specific surface area 11 $m^2/g$ (g) | - | - | - | - | - |
| B-2: Irregularly-shaped alumina, D50=0.3 μm BET specific surface area 7 $m^2/g$ (g) | 300 | - | - | - | - |
| B-2: Irregularly-shaped alumina, D50=0.88 μm BET specific surface area 16 $m^2/g$ (g) | - | 300 | - | - | - |
| C-1: Irregularly-shapedAlN, D50=1 μm (g) | 450 | 450 | 400 | 400 | 400 |
| C-1: Irregularly-shaped AlN, D50=20 μm (g) | 800 | 700 | 700 | 700 | 700 |
| C-2: Irregularly-shaped AlN, D50=70 μm (g) | - | - | - | - | - |
| C-2: Irregularly-shaped AlN, D50=84 μm (g) | - | - | 900 | 800 | 700 |
| C-2: Irregularly-shaped AlN, D50=108 μm (g) | 800 | 800 | - | - | - |
| Total mass of filler (g) | 2350 | 2250 | 2200 | 2450 | 2100 |
| Total mass of composition (g) | 2450 | 2350 | 2300 | 2550 | 2200 |

(continued)

| | Comparative Example 1 | Comparative Example 2 | Comparative Example 3 | Comparative Example 4 | Comparative Example 5 |
|---|---|---|---|---|---|
| Total mass of alumina (B-1) +(8-2) (g) | 300 | 300 | 200 | 550 | 300 |
| (B-1)/[(B-1)+(B-2)] percentage (%) | 0 | 0 | 100 | 100 | 100 |
| Total mass of AlN (C-1) +(C-2) (g) | 2050 | 1950 | 2000 | 1900 | 1800 |
| (C-1) mass (g) | 1250 | 1150 | 1100 | 1100 | 1100 |
| (C-2) mass (g) | 800 | 800 | 900 | 800 | 700 |
| Hardness (SHORE 00) | - | - | - | 67 | 70 |
| Thermal conductivity (W/mK) | - | - | - | 12.7 | 12.3 |
| Degree of plasticity before curing | 100 | 100 | 100 | 78.9 | 54 |
| Formability | Failed | Failed | Failed | Formable | Formable |

As shown in Tables 1 and 2, it was confirmed that the thermal conductivity was high and the degree of plasticity of the composition after defoaming (degree of plasticity before curing) was low in Examples 1 to 5.

In contrast, in Comparative Example 1, the degree of plasticity was high due to the absence of the component B-1, and the formability was determined to be "failed". In Comparative Example 2 in which the component B-1 was not used, the degree of plasticity was high even though thermally conductive particles having a larger BET specific surface area were used, and the formability was determined to be "failed". In Comparative Example 3, the amount of the component B was smaller than the lower limit, the degree of plasticity was high, and the formability was determined to be "failed". In Comparative Example 4, the amount of the component B was larger than the upper limit, and the thermal conductivity was low. In Comparative Example 5, the amount of the component C was smaller than the lower limit, and the thermal conductivity was low.

Industrial Applicability

A thermally conductive composition and a thermally conductive sheet according to the present invention are suitable as a heat dissipation sheet: TIM (Thermal Interface Material) to be interposed between a heat generating member and a heat dissipator in electrical and electronic components and the like.

Description of Reference Numerals

1 Thermal conductivity measuring device
2 Sensor
3a, 3b Sample
4 Sensor tip
5 Electrode for applied current
6 Electrode for resistance value (electrode for temperature measurement)
10 Heat dissipation structure
11a, 11b Thermally conductive sheet
12 Heat spreader
13 Electronic component
14 Wiring board
15 Heat sink

## Claims

1. A thermally conductive composition comprising:

   a matrix resin as component A, constituted by a thermosetting resin;
   a curing catalyst; and
   thermally conductive particles,
   wherein the thermally conductive particles include following components B and C,
   the component B being alumina having a D50 (median diameter) of 0.01 μm or more and less than 1 μm in a volume-based cumulative particle size distribution, contained in an amount of 220 to 500 parts by mass with respect to 100 parts by mass of the matrix resin, the component B including following components B-1 and B-2,
   the component B-1 being alumina having a D50 (median diameter) of 0.01 μm or more and less than 0.3 μm and a BET specific surface area of 9 $m^2$/g or more, contained in an amount of 30 to 100% by mass with respect to 100% by mass of the component B,
   the component B-2 being alumina having a D50 (median diameter) of 0.3 μm or more and less than 1 pm, contained in an amount of 0 to 70% by mass with respect to 100% by mass of the component B,
   the component C being aluminum nitride having a D50 (median diameter) of 0.01 μm to 150 pm, contained in an amount of 1900 to 2500 parts by mass with respect to 100 parts by mass of the matrix resin, the component C including following components C-1 and C-2,
   the component C-1 having a D50 (median diameter) of 0.01 μm or more and less than 30 pm, and
   the component C-2 having a D50 (median diameter) of 30 μm to 150 μm.
   wherein the D50 (median diameter) is measured by a laser diffraction/scattering method according to the description, and the BET specific surface area of thermally conductive particles was measured in accordance with JIS R 1626-1996.

2. The thermally conductive composition according to claim 1,
   wherein a mass ratio between the component C-1 and the component C-2 satisfies: component C-2 ≤ component C-1.

3. The thermally conductive composition according to claim 1 or 2,
   wherein a cured product of the thermally conductive composition has a thermal conductivity of 14 W/m·K or more.

4. The thermally conductive composition according to any one of claims 1 to 3,
   wherein a cured product of the thermally conductive composition has a SHORE 00 hardness of 75 or less.

5. The thermally conductive composition according to any one of claims 1 to 4,
   wherein the matrix resin is at least one polymer selected from the group consisting of an addition curable silicone polymer, a peroxide curable silicone polymer, and a condensation silicone polymer.

6. The thermally conductive composition according to any one of claims 1 to 5, further comprising:
   a silane coupling agent in an amount of 0.1 to 10 parts by mass with respect to 100 parts by mass of the matrix resin.

7. The thermally conductive composition according to any one of claims 1 to 6,
   wherein at least one component selected from the group consisting of the alumina used as the component B and the aluminum nitride used as the component C is irregularly-shaped crushed particles.

8. A thermally conductive sheet formed from the thermally conductive composition according to any one of claims 1 to 7.

9. The thermally conductive sheet according to claim 8,
   wherein the thermally conductive sheet has a thickness of 0.2 to 10 mm.

10. A method for producing a thermally conductive sheet comprising:

    defoaming the thermally conductive composition according to any one of claims 1 to 7 in a vacuum;
    rolling the defoamed thermally conductive composition so as to form a sheet; and
    heat-curing the sheet so as to obtain a thermally conductive sheet.

## Patentansprüche

**1.** Wärmeleitende Zusammensetzung, umfassend:

ein Matrixharz als Komponente A, bestehend aus einem duroplastischen Harz;
einen Härtungskatalysator; und
wärmeleitende Partikel,
wobei die wärmeleitenden Partikel die folgenden Komponenten B und C einschließen,
wobei die Komponente B Aluminiumoxid mit einem D50 (mittleren Durchmesser) von 0,01 μm oder mehr und weniger als 1 μm in einer volumenbasierten kumulativen Partikelgrößenverteilung ist, enthalten in einer Menge von 220 bis 500 Masseteilen, bezogen auf 100 Masseteile des Matrixharzes, wobei die Komponente B die folgenden Komponenten B-1 und B-2 einschließt,
wobei die Komponente B-1 Aluminiumoxid ist, das einen D50 (mittleren Durchmesser) von 0,01 μm oder mehr und weniger als 0,3 μm und eine spezifische BET-Oberfläche von 9 $m^2$/g oder mehr aufweist, enthalten in einer Menge von 30 bis 100 Massenprozent, bezogen auf 100 Massenprozent der Komponente B,
wobei die Komponente B-2 Aluminiumoxid ist, das einen D50 (mittleren Durchmesser) von 0,3 μm oder mehr und weniger als 1 μm aufweist, enthalten in einer Menge von 0 bis 70 Massenprozent, bezogen auf 100 Massenprozent der Komponente B,
wobei die Komponente C Aluminiumnitrid mit einem D50 (mittleren Durchmesser) von 0,01 μm bis 150 μm ist, das in einer Menge von 1900 bis 2500 Masseteilen, bezogen auf 100 Masseteile des Matrixharzes, enthalten ist, wobei die Komponente C die folgenden Komponenten C-1 und C-2 einschließt,
wobei die Komponente C-1 einen D50 (mittleren Durchmesser) von 0,01 μm oder mehr und weniger als 30 μm aufweist, und
wobei die Komponente C-2 einen D50 (mittleren Durchmesser) von 30 μm bis 150 μm aufweist.

wobei der D50 (mittlerer Durchmesser) mittels eines Laserbeugungs-/Streuverfahrens gemäß der Beschreibung gemessen wurde und die spezifische BET-Oberfläche der wärmeleitenden Partikel gemäß JIS R 1626-1996 gemessen wurde.

**2.** Wärmeleitende Zusammensetzung nach Anspruch 1,
wobei ein Massenverhältnis zwischen der Komponente C-1 und der Komponente C-2 folgende Bedingung erfüllt: Komponente C-2 ≤ Komponente C-1.

**3.** Wärmeleitende Zusammensetzung nach Anspruch 1 oder 2,
wobei ein ausgehärtetes Produkt der wärmeleitenden Zusammensetzung eine Wärmeleitfähigkeit von 14 W/m·K oder mehr aufweist.

**4.** Wärmeleitende Zusammensetzung nach einem der Ansprüche 1 bis 3,
wobei ein ausgehärtetes Produkt der wärmeleitenden Zusammensetzung eine Shore 00-Härte von 75 oder weniger aufweist.

**5.** Wärmeleitende Zusammensetzung nach einem der Ansprüche 1 bis 4,
wobei das Matrixharz mindestens ein Polymer ist, das aus der Gruppe ausgewählt ist, die aus einem additionshärtbaren Silikonpolymer, einem peroxidhärtbaren Silikonpolymer und einem Kondensationssilikonpolymer besteht.

**6.** Wärmeleitende Zusammensetzung nach einem der Ansprüche 1 bis 5, weiter umfassend:
ein Silan-Kopplungsmittel in einer Menge von 0,1 bis 10 Masseteilen, bezogen auf 100 Masseteile des Matrixharzes.

**7.** Wärmeleitende Zusammensetzung nach einem der Ansprüche 1 bis 6,
wobei mindestens eine Komponente, ausgewählt aus der Gruppe bestehend aus dem als Komponente B verwendeten Aluminiumoxid und dem als Komponente C verwendeten Aluminiumnitrid, aus unregelmäßig geformten, zerkleinerten Partikeln besteht.

**8.** Wärmeleitende Folie, die aus der wärmeleitenden Zusammensetzung nach einem der Ansprüche 1 bis 7 gebildet ist.

**9.** Wärmeleitende Folie nach Anspruch 8,
wobei die wärmeleitende Folie eine Dicke von 0,2 bis 10 mm aufweist.

**10.** Verfahren zur Herstellung einer wärmeleitenden Folie, umfassend:

Entschäumen der wärmeleitenden Zusammensetzung nach einem der Ansprüche 1 bis 7 unter Vakuum;
Walzen der entschäumten wärmeleitenden Zusammensetzung, um eine Folie zu bilden; und
Wärmehärtung der Folie, um eine wärmeleitende Folie zu erhalten.

**Revendications**

**1.** Composition thermoconductrice comprenant :

une résine matricielle en tant que composant A, constituée par une résine thermodurcissable ;
un catalyseur de durcissement ; et
des particules thermoconductrices,
dans laquelle les particules thermoconductrices incluent les composants B et C suivants,
le composant B étant de l'alumine présentant un D50 (diamètre médian) de 0,01 μm ou plus et inférieur à 1 μm dans une distribution de taille de particule cumulée basée sur le volume, contenu en une quantité de 220 à 500 parties en masse par rapport à 100 parties en masse de la résine matricielle, le composant B incluant les composants B-1 et B-2 suivants,
le composant B-1 étant de l'alumine présentant un D50 (diamètre médian) de 0,01 μm ou plus et inférieur à 0,3 μm et une superficie spécifique BET de 9 $m^2$/g ou plus, contenue en une quantité de 30 à 100 % en masse par rapport à 100 % en masse du composant B,
le composant B-2 étant de l'alumine présentant un D50 (diamètre médian) de 0,3 μm ou plus et inférieur à 1 μm, contenu en une quantité de 0 à 70 % en masse par rapport à 100 % en masse du composant B,
le composant C étant du nitrure d'aluminium présentant un D50 (diamètre médian) de 0,01 μm à 150 μm, contenu en une quantité de 1 900 à 2 500 parties en masse par rapport à 100 parties en masse de la résine matricielle, le composant C incluant les composants C-1 et C-2 suivants,
le composant C-1 présentant un D50 (diamètre médian) de 0,01 μm ou plus et inférieur à 30 μm, et
le composant C-2 présentant un D50 (diamètre médian) de 30 μm à 150 μm. dans lequel le D50 (diamètre médian) est mesuré par un procédé de diffraction/diffusion laser selon la description, et la superficie spécifique BET de particules thermoconductrices a été mesurée conformément à JIS R 1626-1996.

**2.** Composition thermoconductrice selon la revendication 1,
dans laquelle un rapport massique entre le composant C-1 et le composant C-2 satisfait : composant C-2 ≤ composant C-1.

**3.** Composition thermoconductrice selon la revendication 1 ou la revendication 2,
dans laquelle un produit durci de la composition thermoconductrice présente une conductivité thermique de 14 W/m·K ou plus.

**4.** Composition thermoconductrice selon l'une quelconque des revendications 1 à 3,
dans laquelle un produit durci de la composition thermoconductrice présente une dureté SHORE 00 de 75 ou moins.

**5.** Composition thermoconductrice selon l'une quelconque des revendications 1 à 4,
dans laquelle la résine matricielle est au moins un polymère sélectionné parmi le groupe consistant en un polymère de silicone durcissable par addition, un polymère de silicone durcissable par peroxyde et un polymère de silicone de condensation.

**6.** Composition thermoconductrice selon l'une quelconque des revendications 1 à 5, comprenant en outre :
un agent de couplage au silane est en une quantité de 0,1 à 10 parties en masse par rapport à 100 parties en masse de la résine matricielle.

**7.** Composition thermoconductrice selon l'une quelconque des revendications 1 à 6,
dans laquelle au moins un composant sélectionné parmi le groupe consistant en l'alumine utilisée comme composant B et le nitrure d'aluminium utilisé comme composant C est constitué de particules écrasées de forme irrégulière.

**8.** Feuille thermoconductrice constituée de la composition thermoconductrice selon l'une quelconque des revendications 1 à 7.

**9.** Feuille thermoconductrice selon la revendication 8, dans laquelle la feuille thermoconductrice présente une épaisseur de 0,2 à 10 mm.

**10.** Procédé de production d'une feuille thermoconductrice, comprenant :

le démoussage sous vide de la composition thermoconductrice selon l'une quelconque des revendications 1 à 7 ;
le laminage de la composition thermoconductrice démoussée de manière à former une feuille ; et
le durcissement thermique de la feuille de manière à obtenir une feuille thermoconductrice.

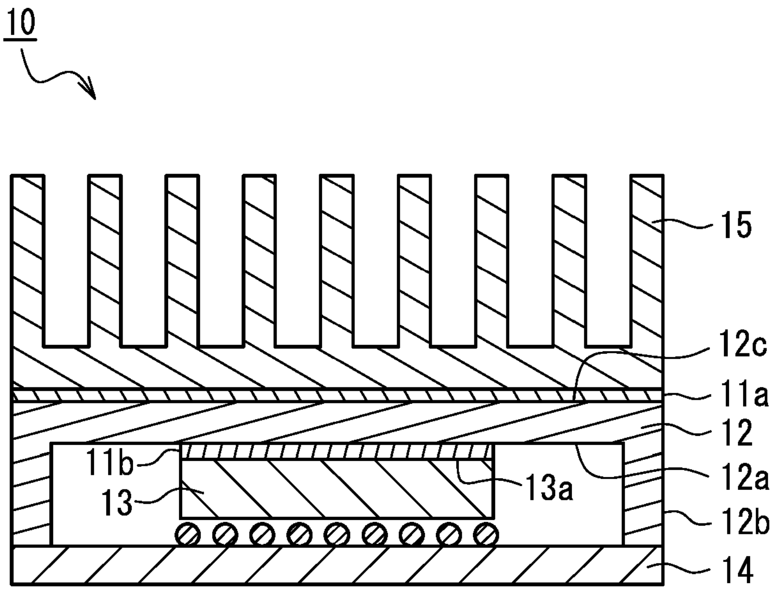


FIG. 1

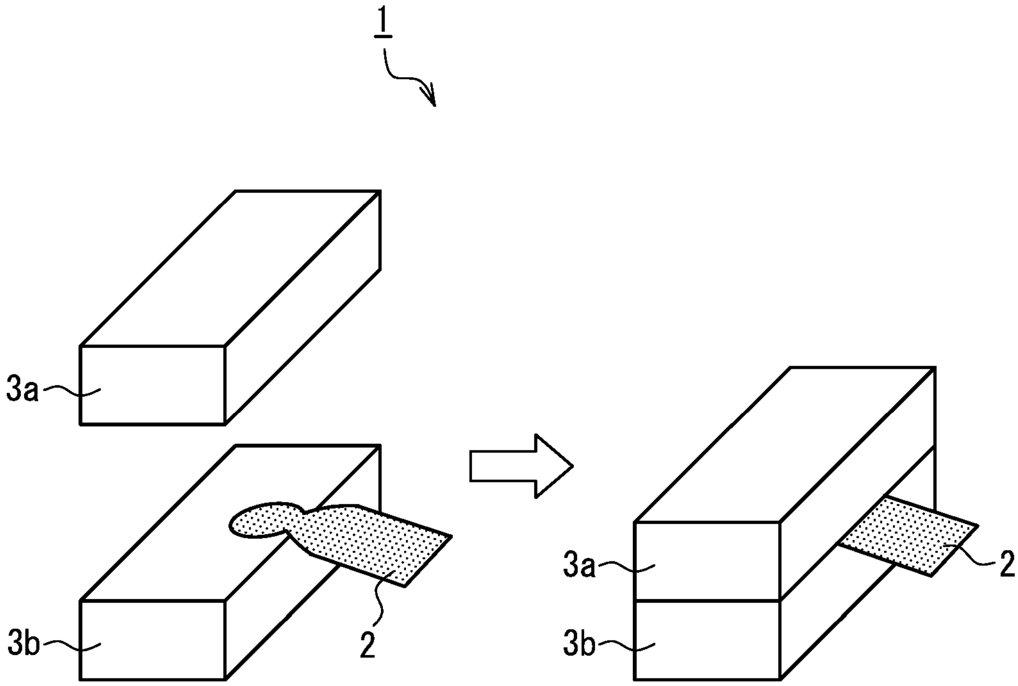


FIG. 2A

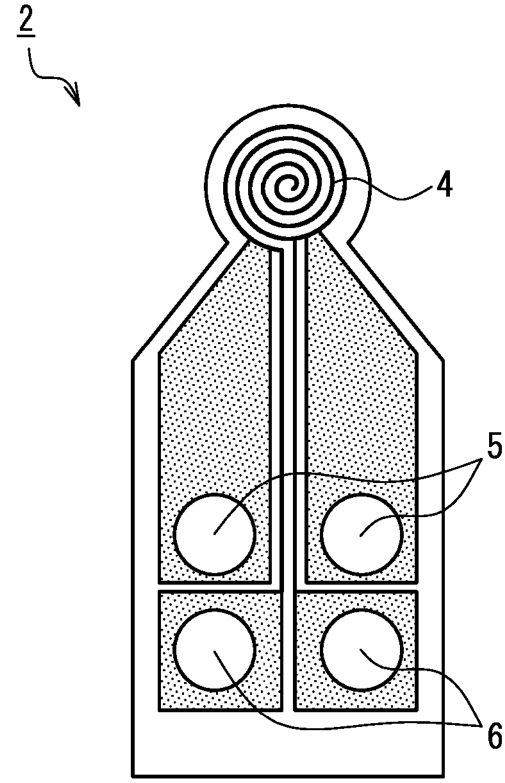


FIG. 2B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2021518466 A
- JP 2020137970 A
- JP 2018088416 A
- JP 2016216523 A
- JP 7061736 B
- CN 112041411 A
- JP 7217079 B